# EUROPÄISCHE PATENTSCHRIFT

(11) **EP 2 676 823 B1**
(45) Veröffentlichungstag und Bekanntmachung des Hinweises auf die Patenterteilung: **23.01.2019**
(21) Anmeldenummer: 12004691.7
(22) Anmeldetag: 22.06.2012
(51) Int. Cl.: B60H 3/00, B60H 1/00

(54) **Verfahren zur Versorgung von Räumen mit Druckluft unter Berücksichtigung der CO2 Konzentration**
Method for supplying spaces with compressed air, taking CO2 concentration into consideration
Procédé d'alimentation d'espaces avec de l'air comprimé en tenant compte de la concentration en CO2

(43) Veröffentlichungstag der Anmeldung: 25.12.2013
(73) Patentinhaber: SEKA Schutzbelüftung GmbH, 76829 Landau (DE)
(72) Erfinder: Müller, Stefan, 45739 Oer-Erkenschwick (DE)
(74) Vertreter: Patentanwälte Dr. Keller, Schwertfeger Partnerschaft mbB

(56) Entgegenhaltungen:
- EP-A1- 1 354 738
- DE-A1- 2 551 401
- DE-A1- 10 006 668
- DE-A1- 19 962 382

## Beschreibung

Verfahren zur automatischen Versorgung von Räumen mit Druckluft unter Berücksichtigung der CO₂-Konzentration.

### Erfindungsgebiet

Die Erfindung bezieht sich auf ein Verfahren sowie eine Vorrichtung zur Versorgung von Räumen mit verdichteter Atemluft, unter Berücksichtigung der Gaskonzentration innerhalb des Raumes als Regelgröße für den zugeführten Luftvolumenstrom.

### Stand der Technik

Aus der EP 1 354 738 A1 ist beispielsweise eine Vorrichtung zur Versorgung von Fahrzeugräumen mit Luft, bei der Gassensoren vorgesehen sind, bekannt. Die Gassensoren dienen dazu, das Gas zu analysieren, das in ein Fahrzeug eindringt.

Weiterhin ist bekannt, Schutzräume und Kabinen außenluftunabhängig mit Atemdruckluft über Speicherflaschen und Kompressoren zu versorgen. Die korrekte Einstellung des zugeführten Luftvolumenstromes legt der Anwender anhand der maximalen Personenzahl im Vorfeld fest und sie wird dementsprechend dauerhaft fix eingestellt.
Um ein Vereisen des Druckreduzierventils bei niedrigen Außentemperaturen zu verhindern, wird erhitzte Umgebungsluft durch Luftheizgebläse auf das Ventil geblasen.
Durch den menschlichen Atmungsprozess gelangen permanent CO₂ und andere Gase in den Schutzraum bzw. die Kabine. Da Schutzräume keinen bis wenig Luftaustausch erlauben, kommt es zu einer stetigen CO₂-Anreicherung in der Kabine. CO₂ ist farb- und geruchslos und kann vom Anwender nicht wahrgenommen werden. Die zulässigen Grenzwerte sind üblicherweise die MAK (Maximale Arbeitsplatz-Konzentration) -Werte. Die Gassensoren lösen erst bei Erreichen des MAK-Wertes eine Anzeige aus und der Anwender hat dann nur sehr bedingt eine sinnvolle Reaktionsmöglichkeit. Er muss dazu wissen, dass er entweder das manuelle Regelventil öffnen muss um mehr Luft in den Raum einzublasen, oder den Schutzraum umgehend verlassen. Ferner kann die Gaskonzentration schon vor Erreichen des MAK-Wertes beim Anwender zu Konzentrationsproblemen, Müdigkeit und Kopfschmerzen, etc. führen.

### Quellen:

### - BGI 581

"Atemluftversorgung von Fahrerkabinen an Erdbaumaschinen und Sondermaschinen des Tiefbaus für den Einsatz im kontaminierten Bereich"

### Zweck der Erfindung

Der Erfindung liegt das Problem zugrunde, dass eine allgemein gültige Einstellung des manuellen Regelventils nicht möglich ist, da die durch den Menschen verursachte Änderung der Luftqualität, im Wesentlichen die O₂- und CO₂-Konzentration, individuell von einer ganzen Reihe physiologischer Faktoren abhängt, wie Geschlecht, Alter, Gewicht, Fitness, etc. und die Räume ein unterschiedliches Innenraumvolumen besitzen. Ferner wird durch eine unterschiedliche Anzahl an Personen innerhalb der Kabine die Gaskonzentration wesentlich beeinflusst. Bei einer fest eingestellten Drossel wird die Luftmenge auf die maximal zulässige Personenzahl eingestellt, unabhängig von der tatsächlichen Belegung.

Dieses Problem wird durch die in den Ansprüchen 1 und 8 aufgeführten Merkmale gelöst. Die Regelung sorgt dafür, dass ohne manuellen Eingriff des Anwenders die der Kabine zugeführte Luftmenge ausreichend ist um die Luftqualität in vorher definierten Grenzen zu regeln; im Wesentlichen den CO-Gehalt zwischen 0-30 ppm, den O₂-Gehalt zwischen 17 bis 22 % und den CO₂-Gehalt von 0 - 20.000 ppm. Eine Fehlbedienung der Anlage ist ausgeschlossen, der individuelle Eintrag durch den Anwender wird egalisiert, die Luftmenge wird dem Bedarf exakt angepasst und es wird folglich nicht mehr Atemdruckluft verbraucht als für einen sicheren Betrieb notwendig ist.

Die in den Ansprüchen 2 und 3 angegebenen Merkmale betreffen das Problem, dass beim Abschalten der Anlage durch den Anwender sich dennoch Personen innerhalb der Kabine aufhalten können, ohne dass eine ausreichende Luftzufuhr gewährleistet ist. Die Folge kann sein, dass sich die Konzentration von Gasen, vorzugsweise CO₂, O₂, H₂S, aliphatische und aromatische Amine, in der Kabine unkontrolliert ändern.

Dieses Problem wird durch die in den Ansprüchen 2 und 3 aufgeführten Merkmale gelöst. Nach Abschalten der Anlage wird durch den unvermeidlichen Anstieg der CO₂-Konzentration das Vorhandensein von Personen detektiert. Durch die dann ausgelöste Anzeige ist sichergestellt, dass die Person in der Kabine gewarnt wird und Maßnahmen ergreifen kann.

Den im abhängigen Anspruch 4 angegebenen Merkmalen liegt die Erfahrung zugrunde, dass bei Alterung, Ausfall oder Fehlfunktion eines Gassensors keine ausreichende Luftzufuhr in die Kabine mehr gewährleistet werden kann.

Dieses Problem wird durch die im Anspruch 4 aufgeführten Merkmale gelöst.
Durch das stetige Abgleichen beider Anzeigewerte gemäß den Merkmalen des Anspruchs 4 werden Fehlfunktionen der Gassensoren selbsttätig erkannt. Wenn die Anlage eingeschaltet wird und die Gaskonzentration bereits über ein als Normal definiertes Maß liegt, ist es möglich beim Einsatz von zwei unabhängigen Sensoren die Plausibilität des Messwertes zu überprüfen.

Dem im abhängigen Anspruch 5 angegebenen Merkmal liegt die Erfahrung zugrunde, dass die Anordnung eines stetig regelnden Ventils vor dem Druckminderer den Einsatz eines Ventils mit einer Druckfestigkeit von 5 bis 500 bar erforderlich macht. Ventile einer höheren Druckstufe verursachen höhere Kosten und somit läuft die gesamte Technologie Gefahr aus Kostengründen verworfen zu werden.

Dieses Kostenproblem wird durch die im Anspruch 5 aufgeführten Merkmale gelöst.
Indem das Ventil, in Durchflussrichtung gesehen, nach dem Druckreduzierventil angeordnet ist, ist der Einsatz eines Ventils mit einer geringeren Druckfestigkeit von 1 bis 20 bar zulässig. Die Kosten für Arbeits- und Gesundheitsschutz werden dadurch reduziert.

Den in den abhängigen Anspruch 6 und 7 genannten Merkmalen liegt das Problem zugrunde, dass der Anwender mit der Angabe des Ist-Drucks in den Druckbehälter nicht auf die verbleibende Einsatzdauer zurückschließen kann. Das Zusammenspiel verschiedener Faktoren, wie Temperaturen und Drücke, macht es dem Anwender praktisch unmöglich die verbleibende Einsatzdauer zu bestimmen.

Gemäß den Merkmalen des Anspruchs 6 kann der Anwender durch die Anzeige der verbleibenden Restlaufzeit der vorhandenen Speicherflasche(n) in einer Zeitangabe rechtzeitig Maßnahmen einleiten. Ferner werden die Kosten durch die Erfassung des Öffnungswinkels des Regelventils für eine zusätzliche Messeinrichtung gespart und es werden weniger Bauteile verwendet, die Störungen verursachen können. Ferner erlaubt es Rettungskräften den Einsatz in Bezug auf die Zeitplanung zu optimieren.

Die Merkmale des Anspruchs 7 betreffen eine alternative Lösung, mit der der Anwender oder Dritte durch die Anzeige der verbleibenden Restlaufzeit in einer Zeitangabe rechtzeitig Gegenmaßnahmen einleiten und eine Gefahrensituation verhindern können.

Das Erfassen der zugeführten Luftmenge über eine Luftmassenstrom-Messeinrichtung erlaubt es Rettungskräften den Einsatz in Bezug auf die Zeitplanung zu optimieren.

Die in den abhängigen Ansprüchen 10 und 11 angegebenen Merkmale überwinden das Problem, dass bei Betrieb der Anlage bei niedrigen Umgebungstemperaturen eine Vereisung des Druckreduzierventils und des stetigen Regelventils erfolgen kann. Durch die Vereisung am Druckreduzierventil kann die Durchflussleistung des Ventils absinken. Eine ausreichende Luftzufuhr in die Kabine kann nicht mehr gewährleistet werden. Ferner führen Eispartikel zu einem erhöhten Verschleiß an den Dichtungen und damit einer verkürzten Lebensdauer der Ventile. Das Anblasen der Ventile mit heißer Luft hat in aggressiver Atmosphäre eine erhöhte Korrosion der Anlagenbauteile zur Folge und das Risiko von Bränden steigt.

Durch das kontrollierte Erwärmen des Mediums vor Eintritt in das Druckreduzierventil wird einer möglichen Vereisung vorgebeugt. Damit werden nachfolgende Anlagenteile geschützt und das Risiko eines Systemausfalls wird minimiert bzw. ausgeschlossen. Durch das Führen einer Rohrschlange in einem Metallblock wird der Kontakt mit der Atmosphäre vermieden. Die selbstbegrenzenden PTC-Heizelemente sorgen durch Ihre Betriebscharakteristik für Oberflächentemperaturen, die das Risiko von Bränden praktisch ausschließt.

Zur Versorgung der Anlage ist ein Kompressor erforderlich. Der Kompressor muss bei Betrieb der Anlage kontinuierlich Atemdruckluft in ausreichender Menge zur Verfügung stellen. Dies bedingt eine im Verhältnis hohe Lieferleistung mit hohem Kraftbedarf am Kompressor-motor. Auch kann die Anlage nicht mobil und auch nicht bei Spannungsausfall weiter betrieben werden. Durch das Vorsehen eines CO₂-Messgeräts, eines Regelgeräts, einer Rohrleitung und eines modulierendem Ventil zum Zwecke der konstanten Einhaltung vorgegebener Grenzwerte kann dieses Problem gelöst werden.

Die dem Regelventil zugeführte Luft wird Druckbehältern mit einem Nennvolumen von 10, 20, 50 oder 80 Litern entnommen. Aus den Druckbehältern strömt die Luft durch ein Rohrsystem zum Druckreduzierventil und von da über das stetig regelnde Ventil in die Kabine.
Die Luft gelangt über den Tanknippel in die Speicherflaschen. Das Rückschlagventil verhindert, dass die Atemdruckluft wieder aus den Speicherflaschen entweicht. Bei einem Druck von 100 - 400 bar, vorzugsweise 300 bar, ist der Tankvorgang abgeschlossen.
Optional kann in das Rohrsystem die Heizung und eine Luftmassenstrom-Messeinrichtung installiert werden.

### Offenbarung der Erfindung

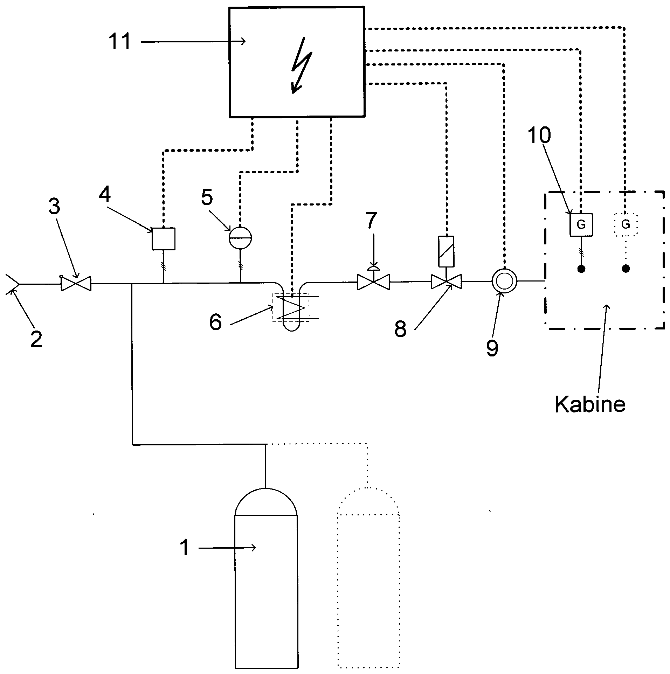

Die in Zeichnung 1 dargestellte Anlage wird mit einen oder mehreren Druckbehältern (1) auf einen oder mehreren Tragrahmen installiert. Die einzelnen Druckbehälter haben einen Nenninhalt von 10, 20, 50 oder 80 Liter.

Für das Füllen der Druckgasflaschen sind weitere Druckgasflaschen, ein Booster-Kompressor oder wahlweise ein Kompressor erforderlich. Die Atemdruckluft muss gem. EN 12021 aufbereitet sein. Diese Komponenten sind Stand der Technik.

Die Anlage wird in den nachstehenden Modi betrieben:

### Füllen der Druckgasflaschen

Die Fülleinrichtung wird über eine Füllkupplung an die Anlage über den Füllnippel (2) angeschlossen und dann gestartet. Während des Füllvorgangs ist die Anlage spannungslos geschaltet und das stetig regelnde Ventil (8) ist geschlossen, der Luftdurchsatz ist damit gestoppt. Nach Erreichen des Enddrucks in den Druckbehältern wird der Kompressor abgeschaltet und die Füllkupplung vom Füllnippel (2) der Anlage getrennt. Das Rückschlagventil (3) verhindert, dass die eingefüllte Luft wieder über den Füllnippel entweicht.

### Atemdruckluft-Betrieb

Beim Einschalten der Anlage wird Druckluft aus den Druckbehältern (1) entnommen. Die Luft strömt über die Heizung (6) zum Druckreduzierventil (7). Im Druckreduzierventil wird der Druck, je nach Voreinstellung, auf 1,5 bar bis 15 bar entspannt. Das Druckreduzierventil (7) regelt den eingestellten Hinterdruck (*Anmerk.: Druck am Austritt*) unabhängig vom durchgesetzten Luftmassenstrom und hält diesen konstant. Am Eintritt des stetig regelnden Ventils (8) herrscht der konstante Hinterdruck des Druckreduzierventils (7). Das stetig regelnde Ventil (8) sorgt durch die aktive Anpassung des Hubs für einen veränderten eingeblasenen Luftvolumenstrom und in Folge für eine konstante Gaskonzentration ohne Eingriff des Anwenders in der Kabine.

Zur Erfassung der Luftqualität in der Kabine werden ein oder mehrere Gassensoren (10) installiert. Die Sensoren (10) erfassen permanent die aktuelle Konzentration in der Kabine und leiten diese an die Regelung (11) weiter. Wird ein in der Regelung vorher definierter unterer Schwellenwert überschritten, erhöht sich die zugeführte Luftmenge in Abhängigkeit der Abweichung gleitend.

Das stetig regelnde Ventil (8) vergrößert daraufhin über die Regelung den Hub und es strömt eine höhere Luftmenge in die Kabine. Durch die höhere Luftmenge wird der Kabine mehr Atemdruckluft zugeführt und die Luftqualität wird wieder innerhalb des zulässigen Toleranzbereiches zurückgeführt und gehalten. Dies geschieht unabhängig von der Anzahl der in der Kabine befindlichen Personen. Ist die Fluchtkabine mit geringerer Personenzahl belegt als maximal zulässig, erhöht sich die Einsatzdauer dementsprechend. Für das Rettungspersonal bleibt dann mehr Zeit Maßnahmen zu ergreifen, bzw. eine Rettung durchzuführen.
Je nach Einsatzort des Schutzraumes kann zur Stromversorgung eine Batterie installiert werden, um bei einem Spannungsausfall im Stromnetz die Stromversorgung zu gewährleisten.

Bei Einsatz von zwei oder mehr Gassensoren (10) werden die Messwerte über die Regelung (11) untereinander verglichen. Der Sensor mit dem ungünstigeren Messwert gibt den Sollwert für die zugeführte Luftmenge vor.

Nach Abschalten der Anlage wird der Hauptstromkreis unterbrochen. Die Messung der Gassensoren (10) erfolgt dann über eine zeitabhängige oder permanente elektronische Selbsthaltung, gespeist über Batteriestrom oder eine externe Spannungsquelle. Die Regelung vergleicht nun den Messwert beim Ausschalten mit den nun folgenden Ist-Werten. Wenn innerhalb des vorgegebenen Zeitintervalls eine relative Änderung der Gaskonzentration im Verhältnis zum Messwert beim Abschalten der Anlage feststellbar ist, wird eine Anzeige ausgelöst.

Die Ist-Werte der Sensoren für Druck (4) und Temperatur (5), sowie der Öffnungswinkel des Magnetventils (8) werden permanent erfasst und an die Regelung übermittelt. Der aktuelle Ist-Luftdurchsatz kann auch mit Hilfe einer Luftmassenmesseinrichtung (9) ermittelt werden. Mit Hilfe eines Algorithmus wird die verbleibende Einsatzdauer der Anlage berechnet. Das Rechenergebnis ist ein Zeitwert, welcher dem Rettungspersonal optisch oder akustisch mitgeteilt werden kann. Die Übertragung kann mit Hilfe von W-LAN, Funk oder kabelgebunden erfolgen. Die Rettungskräfte können anhand der übermittelten Restlaufzeit bei mehreren Schutzräumen entscheiden zu welchem Schutzraum sie zuerst vordringen müssen, bzw. wie viele Personen sich ungefähr im Gefahrenbereich aufhalten.

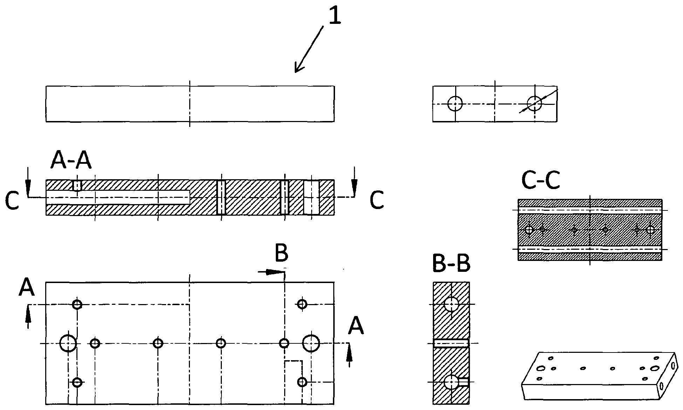

Beim Einsatz des Verfahrens in unbeheizten Hallen, im Freien oder bei Kälte kann eine Heizung (6) vor dem Druckreduzierventil (7) eingebaut werden. Die Ist-Temperatur des Mediums wird mittels eines Temperatursensors (5) erfasst und an die Regelung (10) übermittelt. Bei Unterschreiten eines Schwellenwertes werden ein oder mehrere PTC-Heizelemente (6) über die Regelung, vorzugsweise in mehreren Stufen, eingeschaltet. Die Heizung (Zeichnung 2) besteht aus einem Metallblock (1). In dem Metallblock sind zwei Bohrungen parallel in Längsrichtung entsprechend dem verwendeten Rohraußendurchmesser angebracht. Die Rohrleitung (2) ist U-förmig gebogen und beide Enden werden durch die Bohrungen des Metallblocks (1) geführt. Auf den Außenflächen des Metallblocks sind die Heizelemente (3) angeschraubt.

### Ausführungsbeispiel

Eine Kabine kann als Schutzraum im Brand- oder Havariefall in z. B. Straßentunnel, Fabriken, Kraftwerken, Laboratorien und auf Bohrplattformen genutzt werden. Ferner kann ein Schutzraum die Funktion eines Aufenthaltsraumes besitzen, in dem Arbeiten verrichtet werden oder Ruhezeiten eingehalten werden.

Der unter 1 beschriebenen Anwendung ist gemeinsam, dass die Umgebungsluft mit Schadstoffen belastet ist, bzw. sein kann und bei ungeschütztem Atmen der Umgebungsluft ein Gesundheitsrisiko besteht.

Die in Zeichnung 1 dargestellte Anlage wird mit einen oder mehreren Druckbehältern auf einen oder mehreren Tragrahmen installiert. Die einzelnen Druckbehälter haben einen Nenninhalt von 10, 20, 50 oder 80 Liter.

Für das Füllen der Druckgasflaschen sind weitere Druckgasflaschen, ein Booster-Kompressor oder wahlweise ein Kompressor erforderlich. Die Atemdruckluft muss gem. EN 12021 aufbereitet sein. Diese Komponenten sind Stand der Technik.

Die Anlage wird in den nachstehenden Modi betrieben:

### Füllen der Druckgasflaschen

Die Fülleinrichtung wird über eine Füllkupplung an die Anlage über den Füllnippel angeschlossen und dann gestartet. Während des Füllvorgangs ist die Anlage spannungslos geschaltet und das stetig regelnde Ventil ist geschlossen, der Luftdurchsatz ist damit gestoppt. Nach Erreichen des Enddrucks in den Druckbehältern wird der Kompressor abgeschaltet und die Füllkupplung vom Füllnippel der Anlage getrennt. Das Rückschlagventil verhindert, dass die eingefüllte Luft wieder über den Füllnippel entweicht.

### Atemdruckluft-Betrieb

Beim Einschalten der Anlage wird Druckluft aus den Druckbehältern entnommen. Die Luft strömt über die Heizung zum Druckreduzierventil. Im Druckreduzierventil wird der Druck, je nach Voreinstellung, auf 1,5 bar bis 15 bar entspannt. Das Druckreduzierventil regelt den eingestellten Hinterdruck unabhängig vom durchgesetzten Luftmassenstrom aus und hält diesen konstant. Am Eintritt des stetig regelnden Ventils herrscht der konstante Hinterdruck des Druckreduzierventils. Das stetig regelnde Ventil sorgt durch die aktive Anpassung des Hubs für eine konstante Gaskonzentration ohne Eingriff des Anwenders in der Kabine.

Zur Erfassung der Luftqualität in der Kabine werden ein oder mehrere Gassensoren installiert. Die Sensoren erfassen permanent die aktuelle Konzentration in der Kabine und leiten diese an die Regelung weiter. Wird ein in der Regelung vorher definierter unterer Schwellenwert überschritten, erhöht sich die zugeführte Luftmenge in Abhängigkeit der Abweichung gleitend.

Das stetig regelnde Ventil vergrößert daraufhin über die Regelung den Hub und es strömt eine höhere Luftmenge in die Kabine. Durch die höhere Luftmenge wird der Kabine mehr Atemdruckluft zugeführt und die Luftqualität wird wieder innerhalb des zulässigen Toleranzbereiches zurückgeführt und gehalten. Dies geschieht unabhängig von der Anzahl der in der Kabine befindlichen Personen. Ist die Fluchtkabine mit weniger Personen belegt als zulässig, erhöht sich die Einsatzdauer dementsprechend. Für das Rettungspersonal bleibt dann mehr Zeit Maßnahmen zu ergreifen, bzw. eine Rettung durchzuführen.
Je nach Einsatzort des Schutzraumes kann zur Stromversorgung eine Batterie installiert werden, um bei einem Spannungsausfall im Stromnetz die Stromversorgung zu Gewährleisten.

Nach Abschalten der Anlage wird der Hauptstromkreis unterbrochen. Die Messung der Gassensoren erfolgt dann über eine zeitabhängige oder permanente elektronische Selbsthaltung, gespeist über Batteriestrom oder eine externe Spannungsquelle. Die Regelung vergleicht nun den Messwert beim Ausschalten mit den nun folgenden Ist-Werten. Wird ein Überschreiten eines relativen Schwellwertes festgestellt, wird über die Regelung ein Signal ausgelöst.

Die Ist-Werte der Sensoren für Druck und Temperatur, sowie der Öffnungswinkel des Magnetventils werden permanent erfasst und an die Regelung übermittelt. Der aktuelle Ist-Luftdurchsatz kann auch mit Hilfe einer Luftmassenmesseinrichtung ermittelt werden. Mit Hilfe eines Algorithmus wird die verbleibende Einsatzdauer der Anlage berechnet. Das Rechenergebnis ist ein Zeitwert, welcher dem Rettungspersonal optisch oder akustisch mitgeteilt werden kann. Die Übertragung kann mit Hilfe von W-LAN, Funk oder kabelgebunden erfolgen. Die Rettungskräfte können anhand der übermittelten Restlaufzeit bei mehreren Schutzräumen entscheiden zu welchem Schutzraum sie zuerst vordringen müssen, bzw. wie viele Personen sich ungefähr im Gefahrenbereich aufhalten.

Beim Einsatz des Schutzraumes in unbeheizten Hallen, im Freien oder bei Kälte kann eine Heizung (6) vor dem Druckreduzierventil (7) eingebaut werden. Die Ist-Temperatur des Mediums wird mittels eines Temperatursensors (5) erfasst und an die Regelung übermittelt. Bei Unterschreiten eines Schwellenwertes werden ein oder mehrere PTC-Heizelemente über die Regelung, vorzugsweise in mehreren Stufen, eingeschaltet. Die Heizung (Zeichnung 2) besteht aus einem Metallblock (1). In dem Metallblock sind zwei Bohrungen parallel in Längsrichtung entsprechend dem verwendeten Rohraußendurchmesser angebracht. Die Rohrleitung (2) ist U-förmig gebogen und beide Enden werden durch die Bohrungen des Metallblocks geführt. Auf den Außenflächen des Metallblocks sind die Heizelemente (3) angeschraubt.

## Patentansprüche

1. Verfahren zur Versorgung von Schutzräumen und Kabinen mit Atemdruckluft aus Druckbehältern sowie Kompressoren,
wobei Druckluft aus einem Druckbehälter (1) oder Kompressor entnommen und in einen Schutzraum oder eine Kabine zur außenluftunabhängigen Versorgung des Schutzraumes oder Kabine mit Atemluft geführt wird, wobei
zur stetigen Erfassung der CO₂- Konzentration in dem Schutzraum oder in der Kabine ein oder mehrere Sensoren (10) installiert sind und wobei die Zufuhr der Luftmenge in den Schutzraum oder in die Kabine unter Berücksichtigung der von den ein oder mehreren Sensoren (10) erfassten Werte innerhalb vorgegebener Grenzwerte über ein stetig regelndes Ventil (8) geregelt wird.

2. Verfahren nach Anspruch 1, **dadurch gekennzeichnet, dass** eine Anlage zur Versorgung mit Atemluft vorgesehen ist, wobei in einem Zustand, in dem die Zufuhr von Druckluft in den Schutzraum oder in die Kabine aufgrund einer Abschaltung der Anlage beendet ist, die Gaskonzentration in der Kabine weiterhin stetig oder innerhalb eines vorgegeben Zeitintervalls gemessen wird.

3. Verfahren nach Anspruch 2, **dadurch gekennzeichnet, dass** eine Anzeige ausgelöst wird, wenn innerhalb eines vorgegebenen Zeitintervalls eine relative Änderung der Gaskonzentration im Verhältnis zu einem Messwert zum Zeitpunkt der Abschaltung der Anlage festgestellt wurde.

4. Verfahren nach einem der vorhergehenden Ansprüche, **dadurch gekennzeichnet, dass** wenigstens zwei Sensoren (10) die Gaskonzentration stetig erfassen und eine Regeleinheit (11) vorgesehen ist, wobei die Regeleinheit (11) die von den Sensoren (10) erfassten Werte miteinander vergleicht und bei einer relativen Abweichung der von den Sensoren (10) erfassten Werte über einen festgelegten zulässigen Toleranzwert eine Anzeige ausgelöst wird und ein Soll-Wert für die zugeführte Luftmenge sich nach dem Sensor mit dem höheren Messwert richtet.

5. Verfahren zur Versorgung von Schutzräumen und Kabinen mit Atemdruckluft aus Druckbehältern und Kompressoren nach einem der vorhergehenden Ansprüche,
**dadurch gekennzeichnet,**
**dass**, in Durchflussrichtung gesehen, das stetig regelnde Ventil (8) zur Regelung der Luftmenge nach einem Druckreduzierventil (7) und somit nach erfolgter Druckreduzierung angeordnet ist.

6. Verfahren nach einem der vorhergehenden Ansprüche **dadurch gekennzeichnet, dass** die tatsächliche Kapazität der Druckbehälter (1) aus den Ist-Werten für Druck, Temperatur der Luft aus den Druckbehältern (1) und dem Öffnungswinkel des stetig regelnden Ventils (8) über einen Algorithmus ermittelt wird und dem Anwender die verbleibende Einsatzdauer in einer Zeiteinheit angezeigt wird.

7. Verfahren nach einem der Ansprüche 1 bis 6, **dadurch gekennzeichnet, dass** die tatsächliche Kapazität der Druckbehälter aus den Istwerten für Druck, Temperatur der Luft aus den Druckbehältern (1) und dem Luftmassenstrom über einen Algorithmus ermittelt wird und dem Anwender die verbleibende Einsatzdauer in einer Zeiteinheit bekannt gegeben wird.

8. Vorrichtung zur Durchführung eines Verfahrens nach einem der vorhergehenden Ansprüche, wobei die Vorrichtung umfasst: wenigstens einen Druckbehälter (1) zur Zufuhr von Druckluft in einen Schutzraum oder eine Kabine, eine Rohrleitung, die den Druckbehälter (1) mit dem Schutzraum oder der Kabine verbindet, wenigstens einen Sensor (10) zur stetigen Erfassung der CO₂-Konzentration in dem Schutzraum oder in der Kabine, eine Regelung (11) zum Regeln der Druckluft in dem Schutzraum oder in der Kabine, ein regelndes Ventil (8) zum Regeln der zugeführten Druckluftmenge und einen Anschluss für einen Kompressor.

9. Vorrichtung nach Anspruch 8, **dadurch gekennzeichnet, dass** ein Druckreduzierventil vorgesehen ist und das regelnde Ventil (8) in der Rohrleitung in Durchflussrichtung gesehen hinter dem Druckreduzierventil (7) angeordnet ist.

10. Vorrichtung nach Anspruch 9, **dadurch gekennzeichnet, dass** eine Heizung (6) vor dem Druckreduzierventil (7) vorgesehen ist.

11. Vorrichtung nach Anspruch 10, **dadurch gekennzeichnet, dass** die Heizung (6) einen Metallblock umfasst, in dem ein Abschnitt der Rohrleitung geführt ist, und auf dem selbstbegrenzende PTC-Heizelemente montiert sind.

## Claims

1. Method for supplying protected spaces and cabins with compressed breathing air from pressure vessels and compressors, wherein compressed air is withdrawn from a pressure vessel (1) or compressor and guided into a protected space or a cabin so as to supply the protected space or cabin with breathing air independently of external air, wherein one or more sensors (10) are installed for continuously detecting the CO₂ concentration in the protected space or cabin, and wherein the feed of the air volume into the protected space or cabin is regulated within predetermined limit values using a continuously regulating valve (8) and taking into account the values detected by the one or more sensors (10).

2. Method according to claim 1, **characterised in that** a system for supplying breathing air is provided, the gas concentration in the cabin, in a state in which the feed of compressed air into the protected space or cabin is ended due to the system being switched off, is also measured continuously or within a predetermined time interval.

3. Method according to claim 2, **characterised in that** a notification is generated if, within a predetermined time interval, a relative change of the gas concentration in relation to a measured value was determined at the time of the system being switched off.

4. Method according to any of the preceding claims, **characterised in that** at least two sensors (10) continuously detect the gas concentration and a regulating unit (11) is provided, the regulating unit (11) comparing the values detected by the sensors (10) and a notification being generated if there is a relative deviation of the values (10) detected by the sensors above a specified permissible tolerance value, and a target value for the fed air volume being dependent on the sensor having the higher average value.

5. Method for supplying protected spaces and cabins with compressed breathing air from pressure vessels and compressors according to any of the preceding claims, **characterised in that**, viewed in the direction of flow, the continuously regulating valve (8) for regulating the air volume is arranged downstream of a pressure reduction valve (7) and thus downstream of a performed pressure reduction.

6. Method according to any of the preceding claims, **characterised in that** the actual capacity of the pressure vessel (1) is identified from the current values for pressure, temperature of the air from the pressure vessels (1) and the opening angle of the continuously regulating valve (8) using an algorithm, and the user is notified of the remaining duration of use in a unit of time.

7. Method according to any of claims 1 to 6, **characterised in that** the actual capacity of the pressure vessel is identified from the current values for pressure, temperature of the air from the pressure vessels (1) and the air mass flow using an algorithm, and the user is informed of the remaining duration of use in a unit of time.

8. Device for carrying out a method according to any of the preceding claims, wherein the device comprises: at least one pressure vessel (1) for feeding compressed air into a protected space or cabin, a pipeline which connects the pressure vessel (1) to the protected space or cabin, at least one sensor (10) for continuously detecting the CO₂ concentration in the protected space or cabin, a regulating system (11) for regulating the compressed air in the protected space or cabin and a regulating valve (8) for regulating the fed compressed air volume and a connection for a compressor.

9. Device according to claim 8, **characterised in that** a pressure reduction valve is provided and the regulating valve (8), viewed in the direction of flow, is arranged in the pipeline downstream of the pressure reduction valve (7).

10. Device according to claim 9, **characterised in that** a heating means (6) is provided upstream of the pressure reduction valve (7).

11. Device according to claim 10, **characterised in that** the heating means (6) comprises a metal block in which a portion of the pipeline is guided and on which self-limiting PTC heating elements are mounted.

## Revendications

1. Procédé pour l'alimentation d'espaces protégés et de cabines avec de l'air comprimé respiratoire à partir de réservoirs sous pression et de compresseurs,
dans lequel on prélève de l'air comprimé dans un réservoir sous pression (1) ou un compresseur et on l'envoie dans un espace protégé ou une cabine pour l'alimentation indépendante de l'air extérieur de l'espace protégé ou de la cabine avec de l'air respiratoire,
dans lequel un ou plusieurs capteurs (10) sont installés dans l'espace protégé ou la cabine pour la détection permanente de la concentration en CO₂ et dans lequel on régule l'apport de la quantité d'air dans l'espace protégé ou dans la cabine à l'intérieur de valeurs limites au moyen d'une soupape à régulation permanente (8) en tenant compte des valeurs détectées par lesdits un ou plusieurs capteurs (10).

2. Procédé selon la revendication 1, **caractérisé en ce qu'**il est prévu une installation pour l'alimentation en air respiratoire, dans lequel on mesure en outre la concentration en gaz dans la cabine de façon permanente ou à l'intérieur d'un intervalle de temps prédéterminé, dans un état dans lequel l'apport d'air comprimé dans l'espace protégé ou dans la cabine est terminé en raison d'un arrêt de l'installation.

3. Procédé selon la revendication 2, **caractérisé en ce que** l'on déclenche un affichage, lorsque l'on a constaté à l'intérieur d'un intervalle de temps prédéterminé une variation relative de la concentration en gaz par rapport à une valeur mesurée à l'instant de l'arrêt de l'installation.

4. Procédé selon l'une quelconque des revendications précédentes, **caractérisé en ce qu'**au moins deux capteurs (10) détectent en permanence la concentration en gaz et il est prévu une unité de régulation (11), dans lequel l'unité de régulation (11) compare entre elles les valeurs détectées par les capteurs (10) et lors d'un écart relatif des valeurs détectées par les capteurs (10) au-delà d'une valeur de tolérance admissible fixée on déclenche un affichage et on adresse une valeur de consigne pour la quantité d'air fournie au capteur avec la plus haute valeur mesurée.

5. Procédé pour l'alimentation d'espaces protégés et de cabines avec de l'air comprimé respiratoire à partir de réservoirs sous pression et de compresseurs selon l'une quelconque des revendications précédentes, **caractérisé en ce que**, vue dans la direction d'écoulement, la soupape à régulation permanente (8) pour la régulation de la quantité d'air est disposée après une soupape de réduction de pression (7) et ainsi après qu'une réduction de pression soit effectuée.

6. Procédé selon l'une quelconque des revendications précédentes, **caractérisé en ce que** l'on détermine la capacité réelle des réservoirs sous pression (1) à partir des valeurs réelles pour la pression, la température de l'air provenant des réservoirs sous pression (1) et de l'angle d'ouverture de la soupape à régulation permanente (8) au moyen d'un algorithme et on affiche pour l'utilisateur la durée d'utilisation restante dans une unité de temps.

7. Procédé selon l'une quelconque des revendications 1 à 6, **caractérisé en ce que** l'on détermine la capacité réelle des réservoirs sous pression à partir des valeurs réelles pour la pression, la température de l'air provenant des réservoirs sous pression (1) et du débit massique d'air au moyen d'un algorithme et on signale à l'utilisateur la durée d'utilisation restante dans une unité de temps.

8. Dispositif pour la mise en oeuvre d'un procédé selon l'une quelconque des revendications précédentes, dans lequel le dispositif comprend: au moins un réservoir sous pression (1) pour la fourniture d'air comprimé dans un espace protégé ou une cabine, une conduite, qui relie le réservoir sous pression (1) à l'espace protégé ou à la cabine, au moins un capteur (10) pour la détection permanente de la concentration en CO₂ dans l'espace protégé ou dans la cabine, une régulation (11) pour la régulation de l'air comprimé dans l'espace protégé ou dans la cabine, une soupape de régulation (8) pour la régulation de la quantité d'air fournie et un raccord pour un compresseur.

9. Dispositif selon la revendication 8, **caractérisé en ce qu'**il est prévu une soupape de réduction de pression et la soupape de régulation (8) est disposée dans la conduite après la soupape de réduction de pression (7), en considérant la direction d'écoulement.

10. Dispositif selon la revendication 9, **caractérisé en ce qu'**il est prévu un chauffage (6) avant la soupape de réduction de pression (7).

11. Dispositif selon la revendication 10, **caractérisé en ce que** le chauffage (6) comprend un bloc métallique, dans lequel une partie de la conduite est menée et sur lequel des éléments chauffants PTC à limitation automatique sont montés.
